# EUROPEAN PATENT APPLICATION

(11) **EP 4 116 818 A2**
(43) Date of publication of application: **11.01.2023**
(21) Application number: 22193245.2
(22) Date of filing: 31.08.2022
(51) Int. Cl.: G06F 8/656, G06F 21/57

(54) **SERVICE METHOD FOR HEAD UNIT SOFTWARE, HEAD UNIT SOFTWARE AND RELATED DEVICES**

(30) Priority: 13.09.2021 CN 202111070549
(71) Applicant: Apollo Intelligent Connectivity (Beijing) Technology Co., Ltd., Beijing 100176 (CN)
(72) Inventor: ZHOU, Wenhuan, Beijing, 100176 (CN); HUANG, Qili, Beijing, 100176 (CN); OUYANG, Nengjun, Beijing, 100176 (CN)
(74) Representative: advotec.

(57) **Abstract**

The invention provides a service method for head unit software, head unit software and related devices, and relates to the technical field of artificial intelligence, in particular to the technical fields of automatic driving, Internet of Vehicles and natural language processing. The method includes: obtaining operations related to the HU software; determining service interfaces of operation services comprised in HU system software corresponding to the operations, in which the HU system software is connected to the HU software; and calling the service interfaces to obtain results of executing the operations by the operation services. Therefore, connection protocols in the HU software and the service interfaces of the HU system software are split. Further, the upgrade of the HU software does not involve in an illegal call of the service interfaces, which improves the security of the HU system software.

## Description

### TECHNICAL FIELD

The invention relates to the technical field of artificial intelligence (AI), especially the technical fields of automatic driving, Internet of Vehicles (IoV) and natural language processing (NLP), in particular to a service method for head unit (HU) software, HU software and related devices.

### BACKGROUND

In an interaction scenario of interconnection between a head unit (HU) and a mobile device (MD), many manufacturers take consideration of various reasons, such as safety, research and development (R&D) costs, even network problems (in early years, the HUs do not have network systems) and other factors, which causes that HU software cannot be upgraded.

### SUMMARY

The embodiments of the invention provide a service method for head unit (HU) software, HU software and related devices.

According to a first aspect of the invention, a service method for head unit (HU) software is provided. The method includes: obtaining operations related to the HU software; determining service interfaces of operation services comprised in HU system software corresponding to the operations; and calling the service interfaces to obtain results of executing the operations by the operation services.

According to a second aspect of the invention, a head unit (HU) software product is provided. The HU software product includes: a user interface layer, a protocol layer, and a connection layer that are connected in sequence. The protocol layer is configured to provide a communication protocol among HU software, mobile device software and HU system software. The connection layer is configured to realize connections between the HU software, the mobile device software and the HU system software. The user interface layer is configured to obtain operations related to the HU software, determine service interfaces of operation services comprised in the HU system software corresponding to the operations, and call the service interfaces to obtain results of executing the operations through the protocol layer and the connection layer.

According to a third aspect of the invention, a head unit (HU) is provided. The HU includes: HU system software and HU software connected to the HU system software. Operation services and service interfaces of the operation services are integrated into the HU system software. The HU software is configured to determine service interfaces of operation services comprised in the HU system software corresponding to operations related to the HU software, and call the service interfaces to obtain results of executing the operations by the operation services.

According to a fourth aspect of the invention, an electronic device is provided. The electronic device includes: at least one processor and a memory communicatively coupled to the at least one processor. The memory stores instructions executable by the at least one processor, and when the instructions are executed by the at least one processor, the service method for head unit software according to embodiments of the first aspect of the invention is implemented.

According to a fifth aspect of the invention, a non-transitory computer-readable storage medium having computer instructions stored thereon is provided. The computer instructions are configured to cause a computer to implement the service method for head unit software according to embodiments of the first aspect of the invention.

It should be understood that the content described in this section is not intended to identify key or important features of the embodiments of the invention, nor is it intended to limit the scope of the invention. Additional features of the invention will be easily understood based on the following description.

### BRIEF DESCRIPTION OF THE DRAWINGS

The drawings are used to better understand the solution and do not constitute a limitation to the invention.
FIG. 1 is a schematic diagram of a first embodiment of the invention.
FIG. 2 is a schematic diagram of a connection between mobile phone software and head unit (HU) software according to an embodiment of the invention.
FIG. 3 is a schematic diagram of a second embodiment of the invention.
FIG. 4 is a schematic diagram of a third embodiment of the invention.
FIG. 5 is a schematic diagram of an upgrade sequence for HU software according to an embodiment of the invention.
FIG. 6 is a schematic diagram of a fourth embodiment of the invention.
FIG. 7 is a schematic diagram of a fifth embodiment of the invention.
FIG. 8 is a schematic diagram of a connection between mobile phone software, HU software and a HU system according to an embodiment of the invention.
FIG. 9 is a schematic diagram of a fifth embodiment of the invention.
FIG. 10 is a block diagram of an electronic device used to implement a service method for HU software according to the embodiment of the invention.

### DETAILED DESCRIPTION

The following describes the embodiments of the invention with reference to the accompanying drawings, which includes various details of the embodiments of the invention to facilitate understanding, which shall be considered merely exemplary. For clarity and conciseness, descriptions of well-known functions and structures are omitted in the following description.

In the related art, upgrading the HU software is carried out by upgrading the HU system. However, in the process of upgrading the HU software by upgrading the HU system, upgrading the HU software involves in an illegal call of HU system interfaces, thus reducing the safety of the HU system.

In view of the above problems, the invention provides a service method for HU software, HU software and related devices.

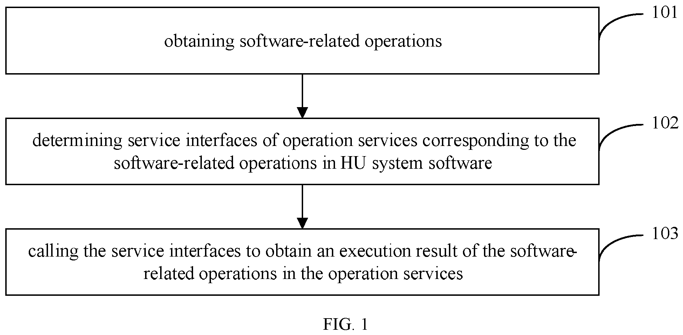

FIG. 1 is a schematic diagram of a first embodiment of the invention. It should be noted that the service method for HU software in the embodiments of the invention may be applied to a service apparatus for HU software in the embodiments of the invention, and the apparatus may be configured in an electronic device. The electronic device may be a mobile terminal, such as a mobile phone, a tablet computer, a personal digital assistant, and other hardware devices with various operating systems.

As illustrated in FIG. 1, the service method for HU software includes the following steps.

In step 101, software-related operations are obtained.

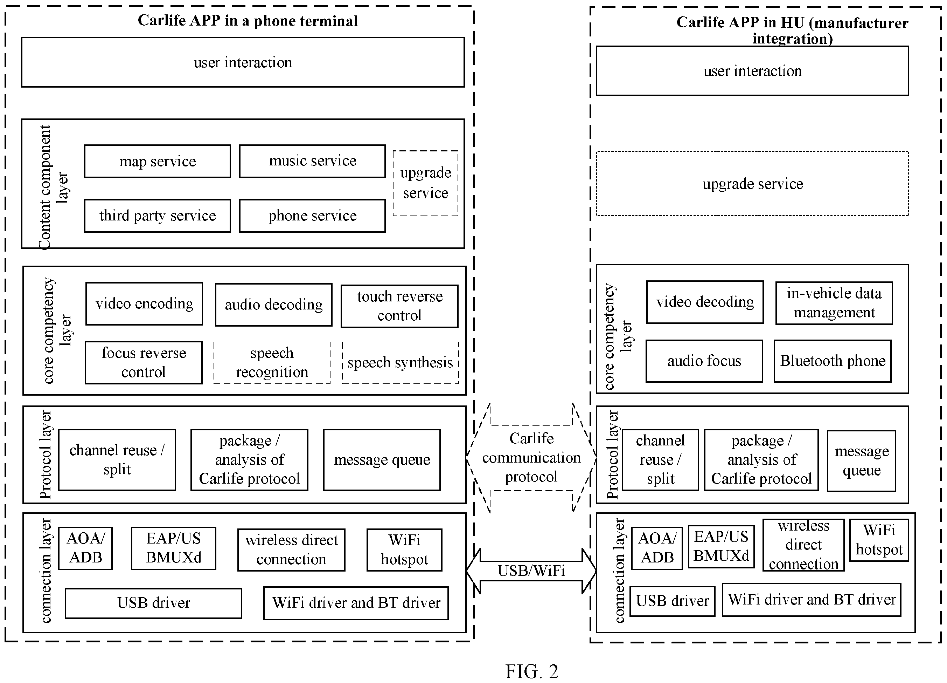

In the embodiment of the invention, taking a mobile device terminal being a mobile phone as an example, as illustrated in FIG. 2, mobile phone software may be projected to the HU software, and the software-related operations to the HU software may be performed by the mobile phone software, or the software-related operations may be performed directly on the HU software. In an example, a Carlife communication protocol is used to project an application from a mobile device to the HU, so that their respective advantages may be sufficiently utilized to provide safe and rich information entertainment experiences.

In order to accurately obtain the software-related operations, when the software-related operations are directly performed on the HU software, the service apparatus for HU software may obtain the software-related operations of the HU software. Alternatively, the software-related operations of the mobile phone software corresponding to the HU software may be obtained by connecting the service apparatus for HU software and the mobile phone software.

In step 102, service interfaces of operation services corresponding to the software-related operations in HU system software are determined.

It should be understood that different software-related operations correspond to different operation services, and different operation service correspond to different service interfaces in the HU system software. Therefore, in the embodiment of the invention, in order to accurately determine the service interfaces of the operation services corresponding to the software-related operations in the HU system software, the service interfaces of the operation services corresponding to the software-related operations may be determined in the HU system according to the software-related operations. It should be noted that the operation services may include at least one of the following services: video decoding service, in-vehicle data management service, audio focus service and Bluetooth phone service. The service interfaces may include a vehicle control interface and a data forward interface. The vehicle control interface corresponds to the video decoding service, the audio focus service and the Bluetooth phone service. The data forward interface corresponds to the in-vehicle data management service.

In step 103, the service interfaces are called to obtain an execution result of the software-related operations by the operation services.

The service apparatus for HU software can call the service interfaces of the operation services corresponding to the software-related operations in the HU system software, and the operation services in the HU system software can execute the software-related operations, to generate an execution result.

In conclusion, by calling the service interfaces of the operation services corresponding to the software-related operations in the HU system software, the result of the software-related operations executed by the operation services is obtained, and connection protocols in the HU software and the service interfaces of the HU system software are split. Further, upgrading the HU software does not involve in an illegal call of the service interfaces, which improves the security of the HU system software.

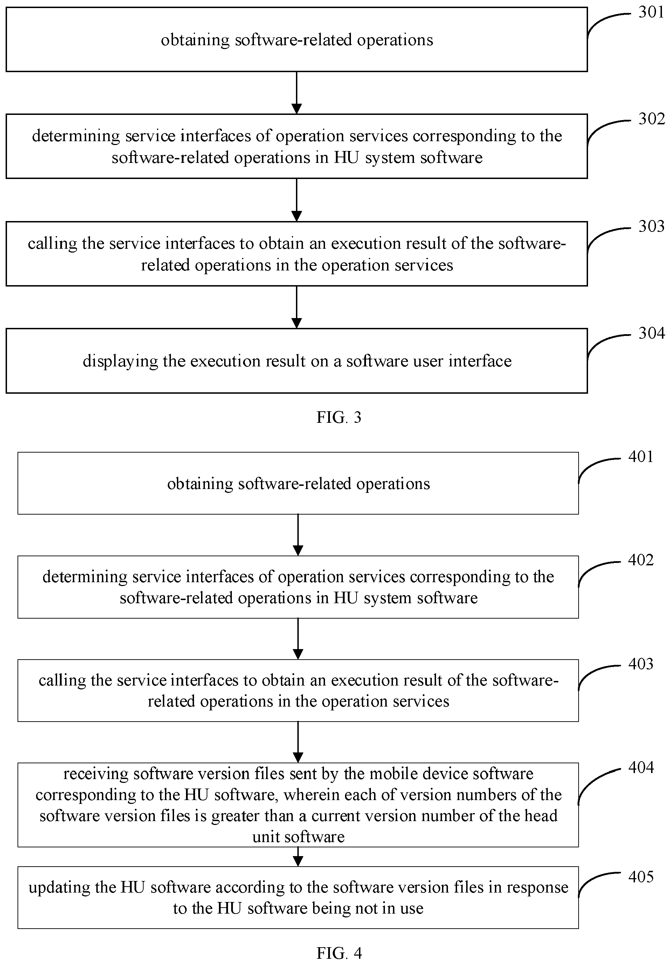

In order to make the execution result of the software-related operations by the operation services more intuitive, as illustrated in FIG. 3, FIG. 3 is a schematic diagram of a second embodiment of the invention. In the embodiment of the invention, after the execution result of the software-related operations by the operation services is obtained, the execution result may be displayed on a software user interface. The embodiment shown in FIG. 3 may include the following steps.

In step 301, software-related operations are obtained.

In step 302, service interfaces of operation services corresponding to the software-related operations in head unit (HU) system software are determined.

In step 303, the service interfaces are called to obtain an execution result of the software-related operations by the operation services.

In step 304, the execution result is displayed on a software user interface.

As an example, the execution result is displayed on a user interface of the HU software.

In the embodiment of the invention, the execution result of the software-related operations by the operation services of the HU system software may be sent to the HU software, and the execution result can be displayed on the user interface of the HU software.

As another example, the execution result of the software-related operations by the operation services of the HU system software may be sent to the mobile device software corresponding to the HU software, and the execution result can be displayed on a user interface of the mobile device.

In the embodiment of the invention, steps 301 to 303 may be implemented in any of the various embodiments of the invention, which are not limited in the embodiments of the invention, and will not be repeated.

Therefore, by displaying the execution result on the software user interface, the execution result of the software-related operations by the operation services can be visually displayed.

In order to upgrade the head unit software, as illustrated in FIG. 4, FIG. 4 is a schematic diagram of a third embodiment of the invention. In the embodiment of the invention, the service apparatus for HU software can receive software version files sent by the mobile device corresponding to the HU software, and upgrade the HU software according to the software version files. The embodiment shown in FIG. 4 may include the following steps.

In step 401, software-related operations are obtained.

In step 402, service interfaces of operation services corresponding to the software-related operations in a head unit system software are determined.

In step 403, the service interfaces are called to obtain an execution result of the software-related operations by the operation services.

In step 404, software version files sent by the mobile device software corresponding to the HU software are obtained, in which each of version numbers of the software version files is greater than a current version number of the HU software.

Optionally, the method includes: starting a receiving operation in response to receiving first command word data sent by the mobile device software; ceasing the receiving operation in response to receiving second command word data sent by the mobile device software; and obtaining the software version files by integrating the received data and performing integrity verification.

That is, after a connection between the HU software and the mobile device software is established, the mobile device software can send an instruction to obtain HU software version information to the HU software, and the HU software sends the current version information to the mobile device software. In addition, after receiving the current version information sent by the HU software, the mobile device software may send a network request for upgrading the HU software according to the current version number of the HU software in the current version information, so as to obtain the software version files with version numbers greater than the current version number of the HU software. Further, the mobile device software may send the software version files with version numbers greater than the current version number of the HU software to the service apparatus for HU software.

As an example, in order to improve the integrity of the software version files, the mobile device software may send the first command word data to the service apparatus for HU software, and the service apparatus for HU software starts the receiving operation in response to receiving the first command word data sent by the mobile device software. When transmission of the software version files from the mobile device software to the service apparatus for HU software is completed, the mobile device software may send the second command word data to the service apparatus for HU software. When the second command word data sent by the mobile device software is received, the service apparatus for HU software ceases the receiving operation, and integrates the received data and performs integrity verification, to obtain the software version files.

In step 405, the HU software is upgraded according to the software version files in response to the HU software being not in use.

In order to improve user experience, in the embodiment of the invention, after obtaining the software version files whose version number is greater than the current version number of the HU software, the HU software is upgraded according to the software version files in response to the HU software being not in use.

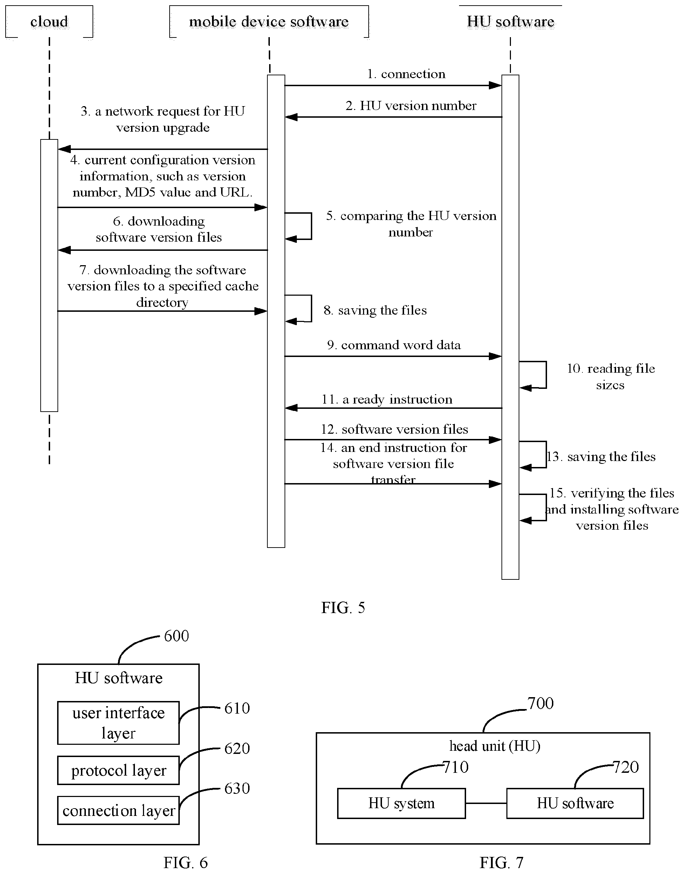

For example, as illustrated in FIG. 5, the specific implementation process of upgrading the HU software according to the software version files can be as follows.
1. The mobile device software and the HU software establish a connection through an Internet of Vehicles (IoV) protocol in a wired or wireless manner.
2. After the connection is established, the mobile device software sends an instruction to obtain the HU software version information, and then the HU software returns the version information of the current HU software to the mobile device software.
3. After the mobile device software obtains the HU software version information, it can send a network request for obtaining version upgrade information.
4. The cloud returns the current configuration version information, and the contents of the version information include a version number of the current cloud configuration, MD5 value (verification value) of the current file, description contents of new version files, and the uniform resource locator (URL) of the software version files to be downloaded.
5. The mobile device software compares the version number returned by the cloud with the currently installed version number obtained from the HU software.
6. If the version number is greater than the current version number of the HU software, the mobile device software requests the cloud to download the software version files according to the URL of the HU software to be upgraded.
7. The cloud downloads the downloaded software version files to a cache directory specified by the mobile device software.
8. The downloaded software version files are verified by the mobile device software, to determine the safety of the downloaded files, and save the software version files.
9. After the verification is completed, the mobile device software starts to send the files to the HU software. Transmission medium can be universal serial bus (USB) wired transmission or wireless fidelity (WiFi) wireless transmission. The design logic of the file transfer protocol is as follows. Before the file transfer starts, the command word data MSG_FILE_TRANSFER_START is sent to inform the HU software to start transferring the files.
10. After receiving the command word data MSG_FILE_TRANSFER_START, the HU software analyzes the current data packet. The package body data content mainly includes: a MD5 value of a file, a file size, a file name and other related data, mainly used for reliability verification of the transferred file.
11. The HU software returns a response data packet MSG_FILE_TRANSFER_READY to the mobile device software to declare that the HU software is ready and can accept the software version file data.
12. After the mobile device software receives a ready instruction, it sends packet header data "MSG_FILE_TRANSFER DATA" and package body data to the HU software, and the package body data includes byte content after conversion of the software version files.
13. When the HU software receives the packet header data "MSG_FILE_TRANSFER_DATA" and package body data, the package body data may be read and written into the file cache directory named with the transferred file.
14. The mobile device continuously transmits data until the whole file transmission is completed, then a data packet with a command word of MSG_FILE_TRANSFER_END is sent to inform the HU software that the transmission is completed.
15. The HU software needs to verify the integrity and security of the received files. For example, security verification is carried out according to the MD5 values in the package body of the command word when the transmission begins, and it is simultaneously determined whether the received file length is consistent with the file size of the transferred file, to ensure the integrity of the transferred file.

In conclusion, the software version files sent by the mobile device software corresponding to the HU software are received, in which each of the version numbers of the software version files is greater than the current version number of the HU software. When the HU software is not in use, the HU software is upgraded according to the software version files. Thus, when the version number of the software version file is greater than the current version number of the HU software, the HU software can be upgraded according to the software version files, which does not involve the illegal call of the service interfaces, thus improving the security of the HU software.

According to the service method for HU software in the embodiments of the invention, by calling the service interfaces of the operation services corresponding to the software-related operations in the HU system software, the execution result of the software-related operations by the operation services is obtained, and the connection protocols in the HU software and the service interfaces of the HU system software are split. Further, upgrading the HU software does not involve an illegal call of the service interfaces, which improves the security of the HU system software.

In order to realize the above embodiments, the invention also provides a head unit software.

FIG. 6 is a schematic diagram of a fourth embodiment of the invention. As illustrated in FIG. 6, head unit (HU) software 600 includes: a user interface layer 610, a protocol layer 620, and a connection layer 630 that are connected in order.

The protocol layer 620 is configured to provide a communication protocol among HU software, mobile device software and HU system software. The connection layer 630 is configured to realize connections between the HU software, the mobile device software and the HU system software. The user interface layer 610 is configured to obtain software-related operations, determine service interfaces of operation services corresponding to the software-related operations in HU system software, and call the service interfaces to obtain an execution result of the software-related operations through the protocol layer and the connection layer. It should be noted that the operation services include at least one of the following services: video decoding service, in-vehicle data management service, audio focus service, and Bluetooth phone service. The service interfaces include at least one of the following interfaces: a vehicle control interface and a data forward interface. The vehicle control interface corresponds to the video decoding service, the audio focus service and the Bluetooth phone service. The data forward interface corresponds to the in-vehicle data management service.

As a possible implementation, the HU software further includes: an upgrade service layer, connected with the protocol layer and the connection layer, and configured to provide upgrade service of the HU software.

As a possible implementation, the HU software further includes the user interface layer. The user interface layer is configured to display the execution result on a user interface of the HU software; or, send the execution result to the mobile device software corresponding to the HU software through the protocol layer and the connection layer, to display the execution result on a user interface of the mobile device software.

With the HU software of the embodiments of the invention, the software-related operations are obtained through the user interface layer, the user interface layer determines the service interfaces of the operation services corresponding to the software-related operations in HU system software, and call the service interfaces to obtain the execution result of the software-related operations through the protocol layer and the connection layer, and connection protocols in the HU software and the service interfaces of the HU system software are split. Further, upgrading the HU software does not involve in an illegal call of the service interfaces, which improves the security of the HU system software.

In order to realize the above embodiments, the invention also provides a head unit (HU).

FIG. 7 is a schematic diagram of a fifth embodiment of the invention. As illustrated in FIG. 7, the HU 700 includes: HU system software 710 and HU software connected to the HU system software.

The HU system software is integrated with operation services and service interfaces corresponding to the operation services. The HU software is configured to determine the service interfaces of the operation services corresponding to the software-related operations in the HU software, and call the service interfaces to obtain the execution result of the software-related operations by the operation services.

In order to illustrate the above embodiments more clearly, examples are described as follows.

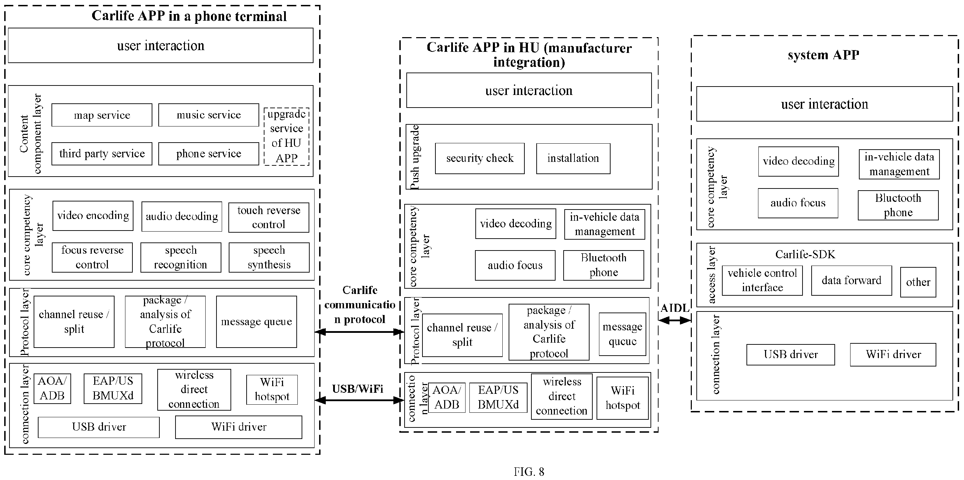

For example, as illustrated in FIG. 8, taking mobile device software being mobile phone software as an example, the mobile phone software and the HU software are connected in a wired or wireless manner. The operation services integrated in the HU software include at least one of the following services: video decoding service, in-vehicle data management service, audio focus service, and Bluetooth phone service. The service interfaces of the operation services may be a vehicle control interface, a data forward interface and other interfaces. The HU software includes a user interface layer, a protocol layer, and a connection layer that are connected in order. The protocol layer is configured to provide a communication protocol among HU software, mobile phone software and HU system software, such as, a general reuse/split protocol, an Internet of Vehicles (IoV) protocol and a message queue protocol. The connection layer is configured to realize connections between the HU software, the mobile phone software and the HU system software. The user interface layer is configured to obtain software-related operations, determine service interfaces of operation services corresponding to the software-related operations in HU system software, and call the service interfaces to obtain an execution result of the software-related operations through the protocol layer and the connection layer.

The HU according to the embodiments of the invention include HU system software and HU software connected to the HU system software. Operation services and service interfaces of the operation services are integrated into the HU system software. The HU software is configured to determine the service interfaces of operation services corresponding to software-related operations in the HU system software, and call the service interfaces to obtain an execution result of the software-related operations by the operation services, thus achieving that connection protocols in the HU software and the service interfaces of the HU system software are split. Further, upgrading the HU software does not involve in an illegal call of the service interfaces, which improves the security of the HU system software.

In order to implement the above embodiments, the invention also provides a service apparatus for HU software.

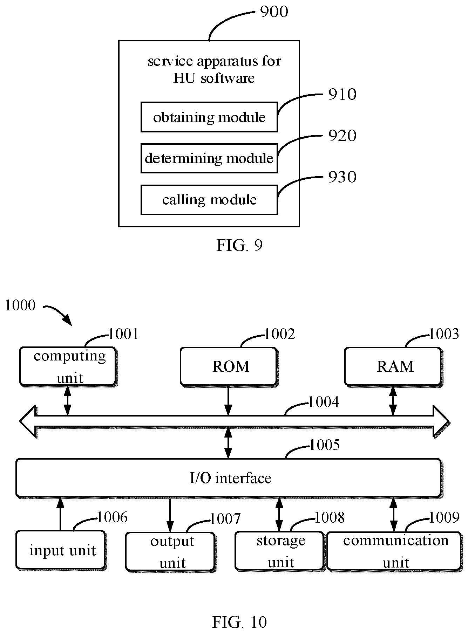

FIG. 9 is a schematic diagram of a fifth embodiment of the invention. As illustrated in FIG. 9, the service apparatus 900 for HU software includes: an obtaining module 910, a determining module 920 and a calling module 930.

The obtaining module 910 is configured to obtain software-related operations. The determining module 920 is configured to determine service interfaces of operation services corresponding to the software-related operations in HU system software. The calling module 930 is configured to call the service interfaces to obtain an execution result of the software-related operations by the operation services.

As a possible implementation, the obtaining module 910 is configured to: obtain the software-related operations of the HU software; or, obtain the software-related operations of the mobile device software corresponding to the HU software.

As a possible implementation, the operation services include at least one of the following services: video decoding service, in-vehicle data management service, audio focus service, and Bluetooth phone service.

As a possible implementation, the service interfaces include at least one of the following interfaces: a vehicle control interface and a data forward interface. The vehicle control interface corresponds to the video decoding service, the audio focus service and the Bluetooth phone service. The data forward interface corresponds to the in-vehicle data management service.

As a possible implementation, the service apparatus for HU software further includes: a displaying module.

The displaying module is configured to: display the execution result on a user interface of the HU software; or, send the execution result to the mobile device software corresponding to the HU software, to display the execution result on a user interface of the mobile device software.

As a possible implementation, the HU software service apparatus further includes: a receiving module and an updating module.

The receiving module is configured to receive software version files sent by the mobile device software corresponding to the HU software, in which each of version numbers of the software version files is greater than a current version number of the HU software. The updating module is configured to upgrade the HU software according to the software version files in response to the HU software being not in use.

As a possible implementation, the receiving module is further configured to: start a receiving operation in response to receiving first command word data sent by the mobile device software; cease the receiving operation in response to receiving second command word data sent by the mobile device software; and obtain the software version files by integrating the received data and performing integrity verification.

With the service apparatus for HU software according to the embodiments of the invention, by calling the service interfaces of the operation services corresponding to the software-related operations in the HU system software, the execution result of the software-related operations by the operation services is obtained, and connection protocols in the HU software and the service interfaces of the HU system software are split. Further, the upgrade of the HU software does not involve illegal calling of the service interfaces, which improves the security of the HU system software.

In the technical solution of the invention, under the premise of user consent, the acquisition, storage, application, processing, transfer, providing and invention of the user personal information are all comply with the provisions of relevant laws and regulations, and do not violate public order and good customs.

According to the embodiments of the invention, the invention also provides an electronic device, a readable storage medium and a computer program product.

FIG. 10 is a block diagram of an example electronic device 1000 used to implement the embodiments of the invention. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the invention described and/or required herein.

As illustrated in FIG. 10, the device 1000 includes a computing unit 1001 performing various appropriate actions and processes based on computer programs stored in a read-only memory (ROM) 1002 or computer programs loaded from the storage unit 1008 to a random access memory (RAM) 1003. In the RAM 1003, various programs and data required for the operation of the device 1000 are stored. The computing unit 1001, the ROM 1002, and the RAM 1003 are connected to each other through a bus 1004. An input/output (I/O) interface 1005 is also connected to the bus 1004.

Components in the device 1000 are connected to the I/O interface 1005, including: an inputting unit 1006, such as a keyboard, a mouse; an outputting unit 1007, such as various types of displays, speakers; a storage unit 1008, such as a disk, an optical disk; and a communication unit 1009, such as network cards, modems, and wireless communication transceivers. The communication unit 1009 allows the device 1000 to exchange information/data with other devices through a computer network such as the Internet and/or various telecommunication networks.

The computing unit 1001 may be various general-purpose and/or dedicated processing components with processing and computing capabilities. Some examples of computing unit 1001 include, but are not limited to, a central processing unit (CPU), a graphics processing unit (GPU), various dedicated AI computing chips, various computing units that run machine learning model algorithms, and a digital signal processor (DSP), and any appropriate processor, controller and microcontroller. The computing unit 1001 executes the various methods and processes described above, such as the service method for HU software. For example, in some embodiments, the method may be implemented as a computer software program, which is tangibly contained in a machine-readable medium, such as the storage unit 1008. In some embodiments, part or all of the computer program may be loaded and/or installed on the device 1000 via the ROM 1002 and/or the communication unit 1009. When the computer program is loaded on the RAM 1003 and executed by the computing unit 1001, one or more steps of the method described above may be executed. Alternatively, in other embodiments, the computing unit 1001 may be configured to perform the method in any other suitable manner (for example, by means of firmware).

Various implementations of the systems and techniques described above may be implemented by a digital electronic circuit system, an integrated circuit system, Field Programmable Gate Arrays (FPGAs), Application Specific Integrated Circuits (ASICs), Application Specific Standard Products (ASSPs), System on Chip (SOCs), Load programmable logic devices (CPLDs), computer hardware, firmware, software, and/or a combination thereof. These various embodiments may be implemented in one or more computer programs, the one or more computer programs may be executed and/or interpreted on a programmable system including at least one programmable processor, which may be a dedicated or general programmable processor for receiving data and instructions from the storage system, at least one input device and at least one output device, and transmitting the data and instructions to the storage system, the at least one input device and the at least one output device.

The program code configured to implement the method of the invention may be written in any combination of one or more programming languages. These program codes may be provided to the processors or controllers of general-purpose computers, dedicated computers, or other programmable data processing devices, so that the program codes, when executed by the processors or controllers, enable the functions/operations specified in the flowchart and/or block diagram to be implemented. The program code may be executed entirely on the machine, partly executed on the machine, partly executed on the machine and partly executed on the remote machine as an independent software package, or entirely executed on the remote machine or server.

In the context of the invention, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), electrically programmable read-only-memory (EPROM), flash memory, fiber optics, compact disc read-only memories (CD-ROM), optical storage devices, magnetic storage devices, or any suitable combination of the foregoing.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein can be implemented in a computing system that includes background components (for example, a data server), or a computing system that includes middleware components (for example, an application server), or a computing system that includes front-end components (for example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (e.g., a communication network). Examples of communication networks include: local area network (LAN), wide area network (WAN), and the Internet.

The computer system may include a client and a server. The client and server are generally remote from each other and interacting through a communication network. The client-server relation is generated by computer programs running on the respective computers and having a client-server relation with each other. The server may be a cloud server, a server of a distributed system, or a server combined with a block-chain.

It should be understood that the various forms of processes shown above can be used to reorder, add or delete steps. For example, the steps described in the invention could be performed in parallel, sequentially, or in a different order, as long as the desired result of the technical solution disclosed in the invention is achieved, which is not limited herein.

The above specific embodiments do not constitute a limitation on the protection scope of the invention.

## Claims

1. A service method for head unit (HU) software, comprising:
obtaining (101, 301, 401) operations related to the HU software;
determining (102, 302, 402) service interfaces of operation services comprised in HU system software corresponding to the operations, in which the HU system software is connected to the HU software; and
calling (103, 303, 403) the service interfaces to obtain results of executing the operations by the operation services.

2. The method of claim 1, wherein obtaining the operations related to the HU software comprises at least one of:
obtaining the operations of the HU software;
obtaining the operations of a mobile device software corresponding to the HU software.

3. The method of claim 1, wherein the operation services comprise at least one of: video decoding service, in-vehicle data management service, audio focus service, and Bluetooth phone service.

4. The method of claim 3, wherein the service interfaces comprise at least one of a vehicle control interface and a data forward interface;
wherein the vehicle control interface corresponds to the video decoding service, the audio focus service and the Bluetooth phone service; and
wherein the data forward interface corresponds to the in-vehicle data management service.

5. The method of claim 1 or 2, further comprising at least one of:
displaying (304) the results on a user interface of the HU software;
sending the results to the mobile device software corresponding to the HU software, so that the results are displayed on a user interface of the mobile device software.

6. The method of any one of claims 1 to 5, further comprising:
receiving (404) software version files sent by the mobile device software corresponding to the HU software, wherein each of version numbers of the software version files is greater than a current version number of the HU software; and
upgrading (405) the HU software based on the software version files in response to the HU software being not in use.

7. The method of claim 6, wherein receiving the software version files sent by the mobile device software corresponding to the HU software, comprises:
starting a receiving operation in response to receiving first command word data sent by the mobile device software;
ceasing the receiving operation in response to receiving second command word data sent by the mobile device software; and
obtaining the software version files by integrating the received data and performing integrity verification.

8. A head unit (HU) software product comprising a user interface layer, a protocol layer, and a connection layer that are connected in sequence, wherein
the protocol layer is configured to provide a communication protocol among HU software, mobile device software and HU system software;
the connection layer is configured to realize connections between the HU software, the mobile device software and the HU system software; and
the user interface layer is configured to obtain operations related to the HU software, determine service interfaces of operation services comprised in the HU system software corresponding to the operations, and call the service interfaces to obtain results of executing the operations through the protocol layer and the connection layer.

9. The software product of claim 8, further comprising:
an upgrade service layer, connected with the protocol layer and the connection layer, and configured to provide upgrade service of the HU software.

10. The software product of claim 8, wherein the operation services comprise at least one of : video decoding service, in-vehicle data management service, audio focus service, and Bluetooth phone service.

11. The software product of claim 10, wherein the service interfaces comprise at least one of a vehicle control interface and a data forward interface;
wherein the vehicle control interface corresponds to the video decoding service, the audio focus service and the Bluetooth phone service; and
wherein the data forward interface corresponds to the in-vehicle data management service.

12. The software product of claim 8, wherein, the user interface layer is further configured to display the results; or,
wherein the results are sent to the mobile device software corresponding to the HU software through the protocol layer and the connection layer, to display the results on a user interface of the mobile device software.

13. A head unit (HU), comprising:
HU system software, wherein operation services and service interfaces of the operation services are integrated into the HU system software; and
HU software connected to the HU system software, wherein the HU software is configured to determine service interfaces of operation services comprised in the HU system software corresponding to operations related to the HU software, and call the service interfaces to obtain results of executing the operations by the operation services.

14. An electronic device, comprising:
at least one processor; and
a memory communicatively coupled to the at least one processor; wherein,
the memory stores instructions executable by the at least one processor, when the instructions are executed by the at least one processor, the at least one processor is enabled to implement the method of any one of claims 1-7.

15. A non-transitory computer-readable storage medium storing computer instructions, wherein the computer instructions are configured to cause a computer to implement the method of any one of claims 1-7.
